# EUROPÄISCHE PATENTSCHRIFT

(11) **EP 1 419 081 B1**
(45) Veröffentlichungstag und Bekanntmachung des Hinweises auf die Patenterteilung: **21.09.2005**
(21) Anmeldenummer: 02747129.1
(22) Anmeldetag: 26.07.2002
(51) Int. Cl.: B62D 5/04, F16H 25/24

(54) **KOMPAKTE ROHRFÖRMIGE, ELEKTRISCH UNTERSTÜTZTE LENKHILFE**
COMPACT TUBULAR SHAPED, ELECTRICALLY SUPPORTED STEERING BOOSTER
DISPOSITIF D'ASSISTANCE DE DIRECTION TUBULAIRE COMPACT, A COMMANDE ELECTRIQUE

(30) Priorität: 15.08.2001 CH 15042001
(43) Veröffentlichungstag der Anmeldung: 19.05.2004
(73) Patentinhaber: ThyssenKrupp Presta AG, 9492 Eschen (LI)
(72) Erfinder: BRUNNSCHWEILER, Daniel, CH-7306 Fläsch (CH); BUCHER, Stefan, CH-8315 Lindau (CH); PINTYE, Ferenc, HU-4033 Debrecen (HU)
(74) Vertreter: Wegmann, Urs
(86) Internationale Anmeldenummer: PCT/CH2002/000421
(87) Internationale Veröffentlichungsnummer: WO 2003/016122

(56) Entgegenhaltungen:
- DE-A- 3 735 517
- DE-A- 4 425 101
- US-A- 4 434 677
- US-A- 5 650 701

## Beschreibung

Die Erfindung bezieht sich auf eine Lenkhilfenanordnung für Kraftfahrzeuge nach Oberbegriff des Anspruchs 1.

Bekannte Servolenksysteme werden beispielsweise hydraulisch unterstützt betrieben dadurch, dass an der Lenkwelle das vom Lenker erzeugte Steuerdrehmoment gemessen wird und damit über eine Hydraulik ein Kolben gesteuert wird, der auf die querliegende Zahnstange des Lenksystems, welche Teil einer Schubstange ist, einwirkt und somit eine Kraftunterstützung je nach Ausschlag des Lenkrades erzeugt. Solche elektrohydraulische Systeme haben den Nachteil, dass bei hohen Fahrzeuggeschwindigkeiten, wo an sich die geringste Servokraftunterstützung benötigt wird, die grösste Hydraulikleistung anfällt und im Stillstand des Fahrzeuges die Kraftunterstützung stark abfällt, wo die grössten Lenkkräfte benötigt würden.

Man hat deshalb bereits versucht, Lenkhilfenanordnungen zu realisieren, die direkt die Zahnstange mit einem Elektromotor antreiben. Solche Systeme sparen Platz und Energie, da der Elektromotor nur bei Bedarf aktiviert wird. Mit elektromotorisch betriebenen Lenkhilfeanordnungnen wäre es möglich, das Hilfskraftangebot zum richtigen Zeitpunkt bereitzustellen, beispielsweise entsprechend stärker bei stillstehendem Fahrzeug.

Aus der US-Patentschrift 5,711,396 ist beispielsweise ein elektromotorisch betriebener Servoantrieb bekannt geworden, welcher direkt auf die Zahnstange des Lenksystems wirkt. Um genügend hohe Kräfte erzeugen zu können, ist ein entsprechend robuster Elektromotor vorgesehen, der entsprechend stark untersetzt werden muss, um genügend hohe Stellkräfte zu erzeugen. Bei der vorerwähnten Patentschrift wurde der Elektromotor seitlich zur Zahnstange beziehungsweise Schubstange angeordnet, welcher ein Kugelspindelgetriebe antreibt, das koaxial zur Zahnstangenachse angeordnet ist und als Untersetzungsgetriebe dient. Bei dieser Anordnung ist nachteilig, dass der Motor und die Getriebeanordnung kompliziert aufgebaut ist und relativ viel Einbauraum beansprucht. Ausserdem ist der Wirkungsgrad nicht besonders hoch. Um Einbauraum zu sparen, wurde auch versucht, rezirkulierende Kugelspindelgetriebe zusammen mit dem Elektromotor koaxial auf der Zahnstangenachse anzuordnen, wie dies beispielsweise aus der GB 2 284 790 bekannt geworden ist. Eine weitere koaxiale Anordnung wurde in der EP 0 101 579 offenbart.

Eine weitere elektrisch unterstützte Lenkhilfeanordnung ist in der US 5,650,701 offenbart. Hier ist ebenfalls eine rohrförmige Anordnung gezeigt, bei welchem der Antriebsmotor koaxial zur Schubstange angeordnet ist, bestehend aus einem Zahnstangenteil und einem Gewindespindelteil. Der koaxial angeordnete Motor treibt mit dessen Rotor eine Kugelumlaufmutter an, welche in Zusammenwirkung mit der Gewindespindel die Translationsbewegung der Schubstange bewirkt. Der Rotor trägt hierbei die rotierende Wicklung, so dass diese über eine Schleifkontaktanordnung gespiesen werden muss. Die Permanentmagnete dieses Gleichstrommotores sind stationär koaxial zur Wicklung im Aussenbereich angeordnet. Wegen der hohen benötigten Schubkräfte und des relativ geringen Wirkungsgrades weist diese Anordnung grosse Abmessungen auf, womit der Einsatzbereich begrenzt ist. Ein spezielles Problem ergibt sich bei solchen Anordnungen mit einem derartigen Kugelspindelgetriebe bzw. Kugelgewindetrieb (KGT) dadurch, dass durch die hohen Schubkräfte sich die Schubstange etwas verbiegt und dadurch der präzis laufende Kugelgewindetrieb verspannt wird, was den Wirkungsgrad massiv verschlechtert. Wegen diesen Verspannungen muss ausserdem der Kugelgewindetrieb wesentlich stärker dimensioniert werden, womit einerseits die Baugrösse erhöht wird und andererseits die technischen Möglichkeiten begrenzt sind. Ein weiterer Nachteil der erhöhten Reibung des Kugelgewindetriebes äussert sich in einem erhöhten Lenkmoment, was ein schlechtes Lenkverhalten bewirkt. Die Rückführung der Kugeln des Kugelgewindetriebes erzeugt ausserdem ein Geräusch. Durch die direkte akustische Kopplung mit dem Chassis wird dieses in die Struktur des Fahrzeuges eingeleitet. Damit wird die Lenkung im Fahrgastraum hörbar, was nicht den heutigen Kundenanforderungen entspricht.

In der DE 44 25 101 A1 wird ein elektrisch unterstütztes, rohrförmiges Lenk - Servosystem beschrieben, bei welchem die Hülse des Rotors des Motors, in dem ein Kugelgewindetrieb gehalten wird selbst um einen Drehpunkt O1 drehbar angeordnet ist. Der Rotor ist somit einseitig in dem Gehäuse auslegerartig, schwenkbar gelagert. Auf der Gegenseite wird das Ganze über die Mutteranordnung abgestützt. Die Hülse ist mit dem Rotor fest verbunden. Um eine Berührung von Stator und Rotor zu vermeiden ist zusätzlich ein Anschlagmittel vorgesehen in Form eines Ringflansches 13a. Durch die schwenkbare Anordnung kann die Mutteranordnung den Verbiegungen oder Verspannungen der Zahnstange besser folgen. Bei dieser Anordnung variiert somit einerseits die Winkellage des Kugelgewindetriebes und andererseits die Breite des Spaltes zwischen Rotor und Stator.

In der US 4,434,677 ist eine Gewindespindel offenbart bei welcher die Spindelmutter als geschlitzte, verkippbare, hülsenförmige Mutter, also nicht als Kugelmutter, ausgebildet ist zur Verminderung des Flankenspiels. Eine Lenkhilfeanordnung wird nicht beschrieben.

In der De 37 35 517 A1 wird eine rohrformige Lenkhilfeanordnung beschrieben, bei der ein koaxial zu einer Schubstange angeordneter Elektromotor mit einem Kugelgewindetrieb die Spindel an der Schubstange bewegt, wobei die Kugelmutter drehbar und am Gehäuse verspannt gelagert ist.

Die bis heute bekannten Anordnungen haben den Nachteil, dass diese relativ aufwendig gebaut sind, insbesondere im Bereich der Lagerung der Kugelmutter und des Motorrotors. Auch ist wegen den begrenzten Wirkungsgraden der bisher bekannten elektrisch betriebenen Servolenkanordnungen der Einsatzbereich begrenzt, da diese auch eine hohe elektrische Speiseleistung des Elektromotors verlangen. Die zur Verfügung stehende elektrische Leistung des Bordnetzes eines Kraftfahrzeuges ist limitiert. Ausserdem sind die bisherigen Lenkhilfen zu wenig kompakt, womit der Einsatz bei kleinen Fahrzeugen ebenfalls begrenzt wird oder ein Einsatz unwirtschaftlich ist.

Die Aufgabe der vorliegenden Erfindung liegt darin, die Nachteile des vorerwähnten Standes der Technik zu beseitigen. Insbesondere besteht die Aufgabe darin, eine elektrische Lenkhilfe für eine Lenkanordnung zu realisieren, welche äusserst kompakt aufgebaut ist und welche es erlaubt, ein rasches Ansprechverhalten mit einer guten Dynamik mit ansprechendem Lenkverhalten für den Lenker zu erzielen, welche bei hohem Wirkungsgrad arbeitet und grosse Stellkräfte direkt auf die Schubstange beziehungsweise Zahnstange wirkend erzeugen kann und wirtschaftlich herstellbar ist. Die Anordnung soll ausserdem sehr kompakt sein und rohrförmig koaxial zur Schubstangenachse angeordnet werden können.

Die Aufgabe wird erfindungsgemäss durch die Anordnung nach den Merkmalen des Anspruchs 1 gelöst. Die abhängigen Ansprüche definieren weitere vorteilhafte Ausführungsformen.

Die Aufgabe wird erfindungsgemäss dadurch gelöst, dass ein koaxial zur Schubstangenachse angeordneter Elektromotor mit seinem Rotor einen Rotations-Translationswandler antreibt. Dieser besteht aus einer Kugelgewindemutter, welche ihrerseits in eine Gewindestange, eine so genannte Kugelumlaufspindel, eingreift, welche in einem Teilbereich der Schubstange angeordnet ist. Diese Anordnung wird auch als Kugelgewindetrieb (KGT) bezeichnet. Die drehbare Mutter ist mit dem Rotor verbunden und drehgelagert und das Lager ortsfest gegen das Fahrzeugchassis abgestützt. Beim Verdrehen der Mutter wird eine axiale Verschiebung der Schubstange bewirkt, womit eine entsprechende Kraft auf die Schubstange einwirkt. Die Mutter und die Schubstange wirken wie ein Getriebe zur Kraftübersetzung. Die Mutter ist erfindungsgemäss mit dem Rotor nicht nur drehbeweglich, sondern auch radial beweglich, bzw. flexibel verbunden, insbesondere über ein elastisches Element, welches Verbiegungen radial aufnehmen kann und trotzdem die Rotationskräfte übertragen kann. Die Mutter kann somit mit ihrer Längsachse gegenüber der Spindelachse leicht verkippen und sich entsprechend der Krafteinwirkung ausrichten. Hierdurch wird das Verklemmen beim durchbiegen der Gewindestange im Kugelgewindetrieb minimal gehalten, womit die Verluste stark sinken. Die radialen Kräfte können auf diese Weise auf mehrere Kugelumläufe sicher verteilt werden. Die Belastung der einzelnen Kugeln wird dadurch geringer und es können kleinere Kugeln verwendet werden. Hierdurch kann die Anordnung wesentlich kleiner und auch kostengünstiger dimensioniert werden. Ausserdem wird eine akustische Entkopplung erreicht, was unerwünschte Geräuschbildung vermeidet.

Als Rotations-Translationskraftwandler sind die bereits bekannten rezirkulierenden Kugelspindelgetriebe bzw. Kugelumlaufspindeltriebe bzw. Kugelgewindetriebe (KGT) besonders geeignet. Bei solchen Anordnungen werden die Kugeln, welche zwischen der Mutter und dem Gewindegang der Gewindestange abrollen, beispielsweise in einer endlosen Schlaufe wieder auf ihre ursprüngliche Position zurückgeführt. Die elastische Verbindung der Mutter zum Rotor erfolgt vorteilhafterweise über eine rohrförmige Hülse, insbesondere eine Metallhülse. Durch entsprechende Wahl des Werkstoffes und der Dimensionen und insbesondere durch Anbringen von Schlitzen kann die gewünschte Elastizität definiert werden.

Mit der erfindungsgemässen Motor-Wandleranordnung können gute Gesamtwirkungsgrade bei sehr kompakter Bauweise und mit hohen Stellkräften ohne Überlastung des Bordnetzes bei kostengünstiger Realisierung erreicht werden. Die Erfindung wird nun nachfolgend beispielsweise mit schematischen Figuren näher erläutert. Es zeigen:
- Fig. 1: schematisch und im Querschnitt eine erfindungsgemässe Lenkhilfenanordnung
- Fig. 2: schematisch und im Querschnitt ein Bauraumschema einer erfindungsgemässen Lenkhilfenanordnung
- Fig. 3: schematisch und im Querschnitt ein Bauraumschema einer Lenkhilfenanordnung gemäss Stand der Technik
- Fig. 4: schematisch und im Querschnitt eine vergrösserte Anordnung gemäss Fig. 1 der Motor-Wandleranordnung
- Fig. 5: schematisch und im Querschnitt ein weiteres Ausführungsbeispiel einer erfindungsgemässen Motor-Wandleranordnung
- Fig. 6: schematisch und im Querschnitt eine weitere Ausführungsform einer erfindungsgemässen Anordnung mit beweglich gelagerter Kugelgewindemutter.
- Fig. 7: schematisch und im Querschnitt eine weitere Ausführungsform einer erfindungsgemässen Anordnung mit beweglich gelagerter Kugelgewindemutter.
- Fig. 8: schematisch und im Querschnitt eine Variante einer Anordnung gemäss Figur 7.

In den Figuren ist schematisch und im Schnitt eine erfindungsgemässe Lenkhilfenanordnung dargestellt mit einer axial verschieblichen Schubstangenanordnung 2, 3 und einer koaxial zu deren Achse angeordneten elektromotorischen Antriebseinheit 7, 8, 9, 10, 11, 12. Die Schubstangenanordnung 2, 3 wird in bekannter Weise in einem Kraftfahrzeug so angeordnet, dass diese an ihren Enden an die lenkbaren Räder gekoppelt ist, beispielsweise über sogenannte Spurstangen 4, welche mit den Rädern, die drehgelagert sind, durch hin und her bewegen beim Steuern verschwenkt werden können, so dass die Räder einen entsprechenden Steuereinschlag erfahren. Die Schubstangenanordnung 2, 3 weist einen ersten Abschnitt 2 auf, auf dessem Stangenteilbereich Zähne eines Lenkgetriebes 5 angeordnet sind, welche im Eingriff mit einem Ritzel stehen, welches über eine Lenkwelle vom Steuerrad beim Steuervorgang angetrieben wird. Die Stangenanordnung 2, 3 ist von einem rohrförmigen Lenkgetriebegehäuse 6 umgeben. Die Schubstangenanordnung 2, 3 enthält einen Zahnstangenteil 2 und, entlang ihrer Achse 1, einen damit verbundenen Kugelumlaufspindelteil 3. Zwischen dem Ritzel und dem Lenkrad entsteht beim Verdrehen eine Krafteinwirkung, welche über Messmittel erfasst wird und das resultierende Signal ausgewertet und entsprechend über eine Steueranordnung bzw. eine Regelkreisanordnung auf die motorische Antriebseinrichtung geführt wird, welche wiederum Kraft auf die Schubstangenanordnung 1 einkoppelt, um auf diese Weise einen leichteren Steuervorgang zu ermöglichen.

Der erste Stangenteilbereich 2 ist fortgesetzt entlang der Achse 1 und mit dem zweiten Stangenteilbereich 3 verbunden, wobei dieser Stangenteil 3 als Kugelumlaufspindel ausgebildet ist und Teil des Antriebes ist. Das äussere Ende des ersten Stangenteil 2 und des zweiten Stangenteil 3 ist im eingebauten Zustand im Fahrzeug mit den verschwenkbaren Rädern wirkverbunden. Am zweiten Stangenteil bzw. an der Kugelspindel 3 ist koaxial umlaufend eine Kugelmutter 21 angeordnet, welche drehbar um die Stangenachse 1 mit einer Lageranordnung 11, 12 gelagert ist, derart dass die Mutter 21 in axialer Richtung gegenüber der Einbauposition und somit gegenüber dem Chassis in axialer Richtung zur Stangenanordnung 2, 3 fixiert ist. Beim Verdrehen der Kugelmutter 21 werden somit die Radialkräfte und die Axialkräfte auf dem kürzesten Weg aufgenommen und in das Gehäuse 7, welches das Lager und den Motor umschliesst, abgeführt. Das Verdrehen der Kugelmutter 21 bewirkt somit eine Längsverschiebung der Kugelumlaufspindel 3 und somit der Stangenanordnung 2, 3. Die Lageranordnung 11, 12 besteht vorteilhafterweise aus einem hochbelastbaren Kugellager, beispielsweise einem doppelreihigen Schrägkugellager und / oder aber auch aus einem Vierpunkt-, Rollen- oder Rillenkugellager.

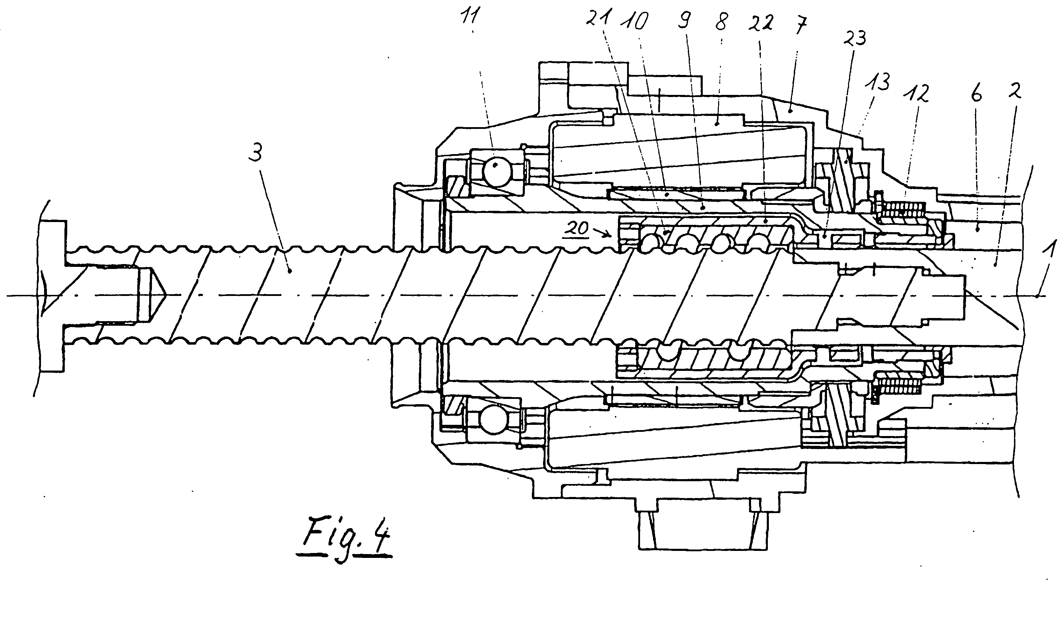

Der Elektromotor ist als elektronisch kommutierter Motor ausgebildet und weist einen Stator 8 auf, welcher als Elektrowicklung ausgebildet ist, ortsfest angeordnet ist und die Kugelspindel 3 koaxial umschliesst, wie dies in vergrösserter Ansicht in Fig. 4 gezeigt ist. Die Statorwicklung 8 wird wie bereits erwähnt von einer Elektroniksteuerungs- bzw. Regelungseinheit angespiesen. Der Rotor 9 des Elektromotors ist vorteilhafterweise rohrförmig als Innenläufer ausgebildet und direkt gemeinsam mit der Kugelmutter 21 über die Lageranordnung 11, 12 beidseitig gelagert. Der Rotor 9 trägt Permanentmagnete 10 mit einem hohen Energieprodukt vom Typ Selten-Erd-Magnete, vorzugsweise vom Typ Cobalt-Samarium oder Neodym.

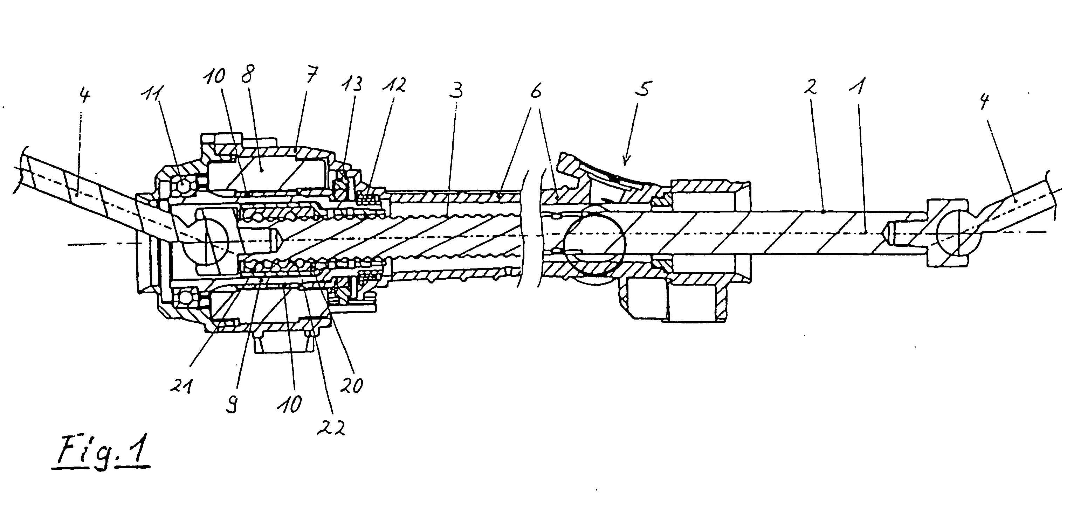

In Fig. 1 und vergrössert in Fig. 4 ist eine bevorzugte Lenkhilfeanordnung dargestellt, bei welcher die Kugelmutter 21 des Kugelgewindetriebes (KGT) 20 bestehend aus Mutter 21, Umlaufkugeln und der Kugelumlaufspindel 3 mit einer flexiblen Hülse 22 mit dem Rotor 9 elastisch verbunden ist. Diese rohrförmige Hülse 22 ist derart ausgebildet, dass sie in Rotationsrichtung im wesentlichen starr ist und die Antriebskräfte des Motors übertragen kann, gleichzeitig aber in radialer Richtung um bis zu einige Zehntel mm auslenken kann, um Verbiegungen der Kugelumlaufspindel elastisch abfangen zu können. Die Hülse 22 umschliesst die Mutter 21 zu dessen Fixierung und ist in ihrer axialen Fortsetzung beispielsweise mit Schlitzen versehen, so dass sich die Hülse in diesem Bereich federelastisch in radialer Richtung zur Achse 1 verbiegen kann. Dazu wird in diesem Biegebereich die Hülse etwas beabstandet sowohl von der Schubstange 2, 3 angeordnet wie auch vom Rotor 9, wo sie an deren Ende fixiert ist, um eine gewisse Auslenkung zu erlauben. Mit diesem erfindungsgemässen Vorgehen ist es möglich, durch vermeiden von Verklemmungen bei Durchbiegen der Kugelspindel 3, die Reibung im Betrieb drastisch zu senken, womit sowohl der Kugelgewindetrieb 20, wie auch die Motoranordnung 7, 8, 9, 10, 11, 12 kleiner dimensioniert werden können. Zusätzlich ist es nun auch möglich, die Teile des Kugelgewindetriebes 20 durch Kaltumformtechnik herzustellen, was wesentlich kostengünstiger ist. Bei dieser Kaltumformtechnik wird das Rohmaterial in einem Ziehprozess zu Stangen geformt mit der gewünschten Formgebung. Bei diesem Vorgang ensteht eine Karbid zeilige Materialstruktur welche der geformten Struktur folgt. Bei nicht kaltumgeformten Wekstücken, bei spanender Bearbeitung gemäss Stand der Technik, werden diese Karbidzeilen von der Kontur geschnitten. Auf dem Rotor 9 wird mit Vorteil ein Winkelsensor 13 vorgesehen zur elektronischen Positionserfassung. Das Signal kann elektronisch ausgewertet werden beispielsweise über eine Mikroprozessorsteuerung und für eine gezielte Kommutierung der Statorwicklung 8 verwendet werden und gleichzeitig zur Verringerung bzw. zur Kompensation des sogenannten Rippels. Dies führt zu einem sehr gleichförmigen Betrieb des Motors und somit zu einem sehr ansprechenden Lenkverhalten.

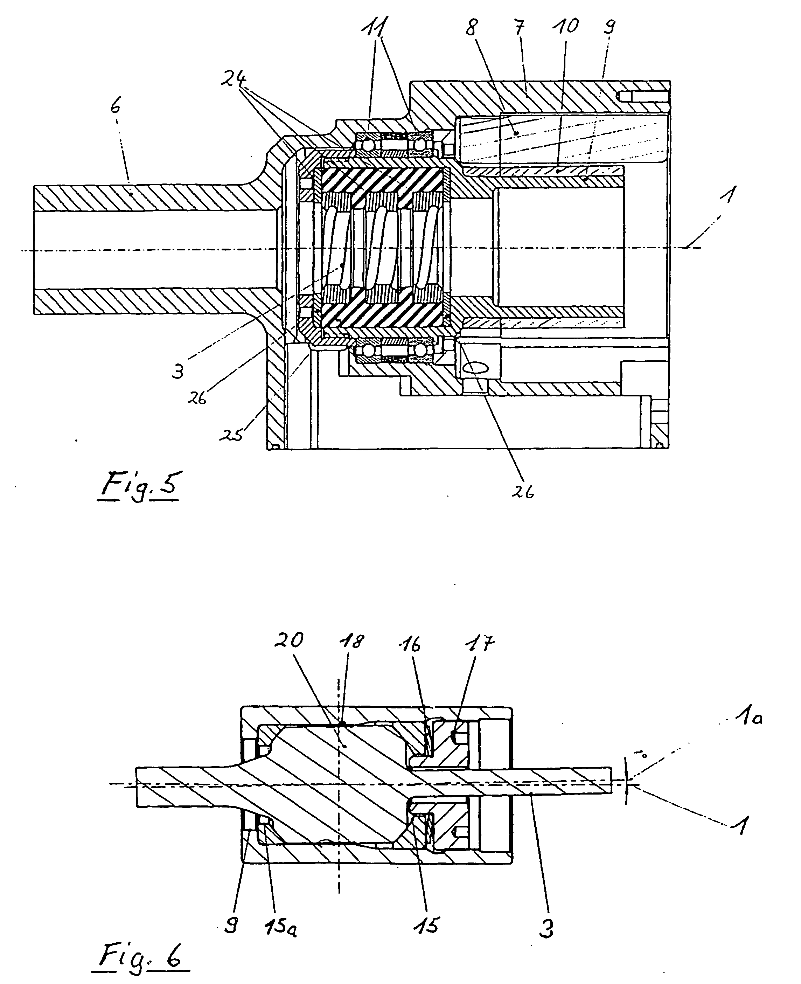

Eine weitere mögliche Ausführung einer elastischen Lagerung der Kugelmutter 21 des Kugelgewindetriebes 20 ist beispielsweise in Fig. 5 dargestellt. Bei dieser Ausführungsform wird die Kugelmutter 21 am Rotor 9 mit einem weichen Material beispielsweise einem Elastomer 25, insbesondere einem gummielastischen Elastomer gehaltert. Hierdurch wird ein leichtes Verkippen der Kugelmutter 21, 24 zugelassen, womit wiederum ein Verklemmen bzw. eine erhöhte Reibung beim Verbiegen der Kugelumlaufspindel 3 verringert werden kann. Im weiteren ist in der Fig. 5 die Möglichkeit dargestellt, wie die Kugelmutter 21, 24 auch in axialer Richtung mit einem scheibenförmigen elastischen Material 26 beidseitig gedämpft werden kann. Eine weitere Möglichkeit Verbiegungen der Kugelumlaufspindel 3 aufzunehmen, besteht darin, die Kugelmutter 21 in mehrere Einzelmuttern 24 zu unterteilen und diese in der elastischen Halterung 25 einzeln elastisch zu lagern.

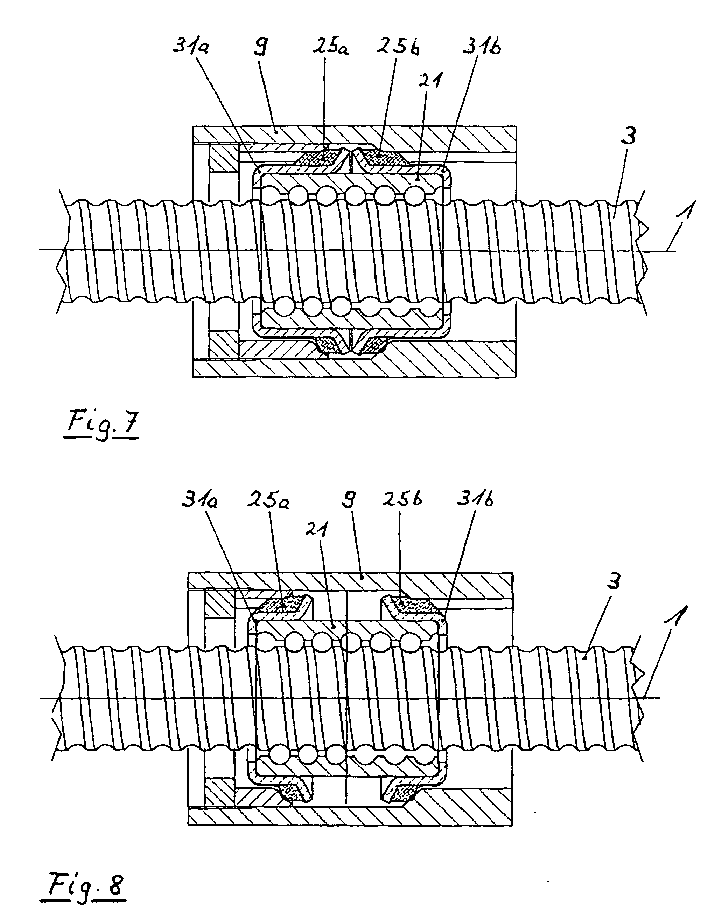

In Figur 6 ist eine weitere Möglichkeit dargestellt die Mutter 21 des Kugelgewindetriebes 20 erfindungsgemäss radial beweglich zu lagern. Die Mutter wird gegenüber dem Rotor 9 radial verkippbar angeordnet, wobei die Mutter in Rotationsrichtung drehbeweglich mit dem Rotor 9 gekoppelt ist. Im gezeigten Ausführungsbeispiel wird dies dadurch erreicht, dass zwischen Rotor 9 und der Mutter eine Toleranzhülse 18 vorgesehen wird welche es ermöglicht bei radialer Belastung relativ zum Rotor 9, also bei Verbiegung der Kugelumlaufspindel 3, die Mutter schräg zu stellen und sich anzupassen. Die Längsachse 1a des Kugelgewindetriebes kann somit gegenüber der Längsachse 1 der Lenkhilfeanordnung entsprechend der Durchbieung der Spindel 3 leicht um einen gewünschten Winkel verkippen. Die Mutter ist an den axialen Enden Kugelig ausgebildet und überträgt die Kräfte hierbei an entsprechend kugelförmig ausgebildete Anschläge 15, 15a. Bei Pivotierung der Mutter an der Toleranzhülse 18 verdreht sich die Mutter des Kugelgewindetriebes 20 relativ zu den Anschlägen 15 und 15a. Das Motormoment wird über die Toleranzhülse 18 auf die Mutter des Kugelgewindetriebes 20 übertragen wodurch die Kugelumlaufspindel 3 axial bewegt wird ohne zu Verklemmen bei Durchbiegung. Der Aufbau einer solchen Pivotmutteranordnung ist mit der Toleranzhülse gut dimensionierbar und einfach aufzubauen.
Weitere bevorzugte, erfindungsgemässe Ausbildungen sind in den Figuren 7 und 8 im Querschnitt dargestellt. Die Mutter 21 welche mit ihren Kugeln um die Spindel 3 mit Achse 1 drehbar gelagert ist wird vom Rotorteil 9 radial beweglich federelastisch gehalten. An der Mutter 21 sind zwei, diese aufnehmende, Hülsenteile 31a und 31b drehfest angeordnet. Die Hülsenteile 31a und 31b weisen ihrem Aussendurchmesser elastische Elemente 25a und 25b aus einem Elastomer auf. Diese elastischen Elemente stützen sich am Innendurchmesser des Rotorteiles 9 derart ab, dass die Mutter 21 am Rotor drehfest aber federelastisch, radial beweglich und insbesondere verkippbar gegenüber der Spindel 3 mit der Achse 1 gelagert ist.
Durch die Wahl des Elastomeres und dessen geometrischer Ausbildung können die Eigenschaften der Beweglichkeit und der Verkippbarkeit wunschgemäss angepasst werden. Es kann beispielsweise der Verkippungswinkel definiert werden und die dazu benötigte Federkraft. Die Ringförmig angeordneten elastischen Elemente 25a und 25b können auf dem Umfang der Mutter 21 beispielsweise in axialer Richtung gegenüber der Muttermitte unterschiedlich beabstandet angeordnet werden. In Figur 7 ist ein Beispiel gezeigt wo die ringförmigen elastischen Elemente 25a und 25b in axialer Richtung nahe beieinander liegen im Bereich der Muttermitte. Dadurch werden vor allem die Verkippungsmöglichkeiten bevorzugt. In Figur 8 sind die elastischen Elemente 25a und 25 b weiter beabstandet. Hierdurch wird die radiale Beweglichkeit bevorzugt. In der unteren Hälfte der Figuren ist schematisch dargestellt wie auch die Breite der elastischen Elemente 25a und 25b variiert werden kann.

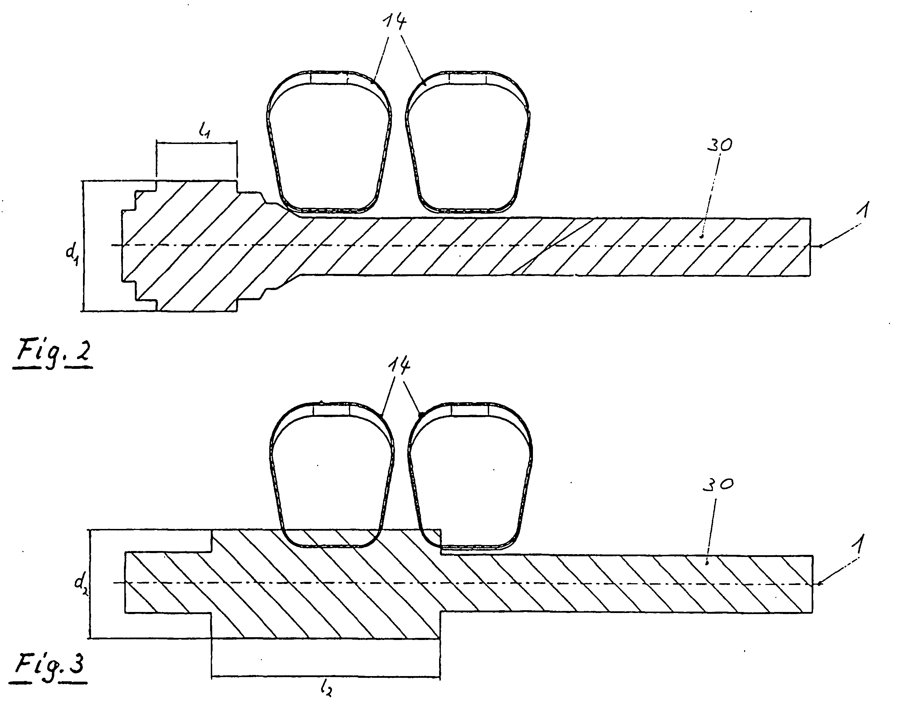

Beispielsweise wird nun anschliessend eine erfindungsgemässe Anordnung verglichen mit einer Anordnung entsprechend dem Stand der Technik. Die erfindungsgemässe Anordnung ermöglicht insbesondere eine sehr kompakte Bauweise wie dies in der Fig. 2 in einem Bauraumschema dargestellt ist. Die Fig. 2 zeigt schematisch und im Querschnitt den beanspruchten Bauraum der Lenkhilfeanordnung 30 mit den entsprechenden Dimensionen des Antriebes angegeben durch die Länge l₁ der Antriebseinheit und deren Durchmesser d₁. Ausserdem sind die Hüllkurven der Abgasrohre 14 dargestellt. Bei einer geforderten Zahnstangenkraft von 7,6 kN sind die Hauptabmessungen der erfindungsgemässen Ausführung entsprechend Fig. 2 für die Länge l_{1 =} 70 mm und den Durchmesser d₁ = 110 mm. Daraus kann eine Kennziffer errechnet werden nach der Gleichung: Länge * (Durchmesser)² ,was zu einer Kennzahl von 847'000 führt.

Bei der Anordnung gemäss dem Stand der Technik wie dies in Fig. 3 dargestellt ist, wird eine Zahnstangenkraft von 6,5 kN spezifiziert. Hierzu ist ein Motorantrieb notwendig mit einer Länge l₂ von 200 mm bei einem Durchmesser d₂ von 92 mm. Dies führt zur Kennzahl l₂ * (d₂)² = 1'692'800. Ausserdem ist aus der Fig. 3 ersichtlich, dass die Hüllkurve der Lenkhilfeanordnung 30 in diesem Fall die Hüllkurven der Abgasrohre schneidet. Dies bedeutet, das eine solche Lenkhilfeanordnung, alleine schon raumbedingt, bei diesen Verhältnissen nicht einsetzbar wäre.

## Patentansprüche

1. Lenkhilfe-anordnung zur Verschwenkung von lenkbaren Fahrzeugrädern bei Drehung eines Lenkrades, wobei diese Anordnung umfasst:
eine Zahnstange (2) mit einer Längsachse (1), welche axial verschiebbar ist, um eine Verschwenkbewegung der Räder zu bewirken, wobei die Zahnstange (2) in Fortsetzung der Längsachse (1) mit einer zweiten Stange (3) verbunden ist, welche als Kugelumlaufspindelstange (3) ausgebildet ist;
ein Lenkgetriebe (5), welches beim Drehen des Lenkrades eine Lenkkraft auf die Zahnstange (2) überträgt;
eine Kugelmutter (21), die in die Kugelumlaufspindelstange (3) eingreift;
eine koaxial zur Kugelumlaufspindel (3) angeordnete Elektromotoranordnung (7, 8, 9, 10, 11, 12) mit einem Stator (8) und mit einem Rotor (9), der mit einer Lageranordnung (11, 12) gegenüber einem ortsfesten Gehäuse (7) drehbar und beidseitig gelagert ist und welcher mit der Kugelmutter (21) wirkverbunden ist, wobei die Elektromotoranordnung (7, 8, 9, 10, 11, 12) als bürstenloser elektronisch kommutierter Gleichstrommotor ausgebildet ist, dessen Rotor (9) mit Selten-Erd-Permanentmagneten (10) bestückt ist, wobei die Kugelmutter (21) mit dem Rotor (9) radial beweglich verbunden ist und die bewegliche Verbindung als verkippbare Verbindung ausgebildet ist,
**dadurch gekennzeichnet, dass** an der Kugelmutter (21) zwei, diese aufnehmende Hülsenteile (31a) und (31b) drehfest angeordnet sind, die an ihrem Aussendurchmesser ringförmige elastische Elemente (25a) und (25b) aufweisen, wobei sich diese elastischen Elemente (25a) und (25b) am Innendurchmesser des Rotorteils (9) abstützen und diese elastischen Elemente (25a)und (25b) in axialer Richtung gegenüber der Mitte der Kugelmutter (21) vorgegeben beabstandet anbringbar sind zur Einstellung der Beweglichkeit und Verkippbarkeit.

2. Anordnung nach Anspruch 1 **dadurch gekennzeichnet, dass** die elastischen Elemente (25) ein Elastomer enthalten.

3. Anordnung nach einem der Ansprüche 1 oder 2 **dadurch gekennzeichnet, dass** die Kugelmutter (21) mehrteilig ausgebildet ist und die Teile elastisch gelagert sind.

4. Anordnung nach einem der vorhergehenden Ansprüche 1 bis 3 **dadurch gekennzeichnet, dass** die Kugelmutter (21) und /oder die Kugelumlaufspindel (3) ein kaltumgeformtes Metallteil ist.

5. Anordnung nach einem der vorhergehenden Ansprüche 1 bis 4 **dadurch gekennzeichnet, dass** die Motoranordnung (7, 8, 9, 10, 11, 12) und die Kugelmutter (21) koaxial ineinander geschoben angeordnet sind.

## Claims

1. Steering aid arrangement for swivelling steerable vehicle wheels on rotation of a steering wheel, where this arrangement comprises:
a toothed rod (2) with a longitudinal axis (1) that is axially displaceable to achieve a swivel movement of the wheels, the toothed rod (2) being connected in continuation of the longitudinal axis (1) with a second rod (3) which is formed as a recirculating ball spindle rod (3);
a steering gear (5), which on turning the steering wheel transmits a steering force to the toothed rod (2);
a ball nut (21) which engages in the recirculating ball spindle rod (3);
an electric motor arrangement (7, 8, 9, 10, 11, 12) arranged coaxial to the recirculating ball spindle (3), with a stator (8) and a rotor (9) mounted on both sides rotatably in relation to a stationary housing (8) via a bearing arrangement (11, 12) and actively connected with the ball nut (21), the electric motor arrangement (7, 8, 9, 10, 11, 12) being formed as a brushless electronically commutated DC motor, the rotor (9) of which is fitted with rare earth permanent magnets (10), where the ball nut (21) is connected with the rotor (9) radially mobile and the mobile connection is formed as a tilting connection,
**characterised in that** on the ball nut (21) and holding this are arranged rotationally stationary two sleeve parts (31a) and (31b) which at their outer diameter have annular elastic elements (25a) and (25b), where these elastic elements (25a) and (25b) rest on the inner diameter of the rotor part (9) and these elastic elements (25a) and (25b) can be brought spaced in the axial direction at a prespecified distance from the centre of the ball nut (21) in order to set the mobility and tiltability.

2. Arrangement according to claim 1, **characterised in that** the elastic elements (25) comprise an elastomer.

3. Arrangement according to one of claims 1 or 2, **characterised in that** the ball nut (21) is formed in several pieces and the parts are elastically mounted.

4. Arrangement according to any of the previous claims 1 to 3, **characterised in that** the ball nut (21) and/or the recirculating ball spindle (3) are a cold-formed metal part.

5. Arrangement according to any of the previous claims 1 to 4, **characterised in that** the motor arrangement (7, 8, 9, 10, 11, 12) and the ball nut (21) are arranged coaxially inserted in each other.

## Revendications

1. Dispositif de direction assistée pour braquer des roues directrices d'un véhicule par rotation d'un volant, qui comprend:
une crémaillère (2) à axe longitudinal (1), qui peut coulisser axialement pour provoquer un mouvement de braquage des roues, la crémaillère (2) étant connectée dans la continuation de l'axe longitudinal (1) à une deuxième tige (3) consistant en une tige (3) en forme de broche à circulation de billes;
un mécanisme de direction (5), qui transmet une force de braquage à la crémaillère (2) lors d'une rotation du volant;
un écrou (21) à billes qui est prise avec la tige (3) en forme de broche à circulation de billes;
un dispositif de moteur électrique (7, 8, 9, 10, 11, 12), agencé sur la broche (3) à circulation de billes et incluant un stator (8) et un rotor (9) qui est logé à rotation sur ses deux côtés sur un carter fixe (7) au moyen d'un dispositif de palier (11, 12) et qui est connecté fonctionnellement à l'écrou (21) à billes, le dispositif de moteur électrique (7, 8, 9, 10, 11, 12) consistant en un moteur à courant continu électroniquement commuté sans balais dont le rotor est équipé d'aimants permanents (10) à terres rares, et l'écrou (21) à billes étant connecté de façon radialement mobile au rotor (9) d'une manière telle que la connexion mobile consiste en une connexion basculante;
**caractérisé en ce que** deux éléments (31a) et (31b) de douilles qui reçoivent l'écrou (21) à billes et comportent des éléments annulaires élastiques (25a) et (25b) sur leurs diamètres externes respectifs sont fixés sans possibilité de rotation sur cet écrou (21) à billes, ces éléments élastiques (25a) et (25b) s'appuient sur le diamètre interne de la partie de rotor (9) et ces éléments élastiques (25a) et (25b) peuvent être montés à distance prédéterminée en direction axiale par rapport au milieu de l'écrou (21) à billes afin de régler la capacité de déplacement et de basculement.

2. Dispositif selon la revendication 1, **caractérisé en ce que** les éléments élastiques (25) contiennent un élastomère.

3. Dispositif selon la revendication 1 ou 2, **caractérisé en ce que** l'écrou (21) à billes consiste en plusieurs parties et **en ce que** les parties sont logées élastiquement.

4. Dispositif selon l'une quelconque des revendications précédentes, **caractérisé en ce que** l'écrou (21) à billes et/ou la broche (3) à circulation de billes sont des éléments métalliques formés à froid.

5. Dispositif selon l'une quelconque des revendications précédentes, **caractérisé en ce que** le dispositif de moteur (7, 8, 9, 10, 11, 12) et l'écrou (21) à billes sont disposés en étant coulissés coaxialement l'un dans l'autre.
